# DEMANDE DE BREVET EUROPEEN

(11) **EP 0 885 804 A1**
(43) Date de publication de la demande: **23.12.1998**
(21) Numéro de dépôt: 98401460.5
(22) Date de dépôt: 15.06.1998
(51) Int. Cl.: B64D 37/26, F16K 17/40

(54) **Dispositif de vidange pour réservoir de carburant**

(30) Priorité: 18.06.1997 FR 9707583
(71) Demandeur: SOCIETE D'ETUDES ET DE CONSTRUCTIONS AERO-NAVALES, F-92230 Gennevilliers (FR)
(72) Inventeur: Mabru, Thierry Edmond Sylvestre, 51100 Reims (FR); Reis, Jean-Luc Albert, 51420 Witry les Reims (FR); Martin, Claude, 95430 Auvers sur Oise (FR)
(74) Mandataire: Coester, Jacques Charles

(57) **Abrégé**

Dispositif de vidange pour réservoirs de fluide en particulier de carburant en particulier pour aéronefs et analogues, caractérisé en ce qu'il comporte une embase (4) fixée à la paroi (1) du réservoir dans une ouverture de celui-ci, ladite embase supportant une collerette (9) par des bras radiaux (10), ladite collerette étant reliée par un organe sécable (15) à une porte (13) assurant la fermeture de l'embase (4) et un ensemble pyrotechnique (16) étant prévu pour provoquer la rupture de l'organe sécable.

## Description

L'invention concerne les dispositifs de vidange pour les réservoirs d'aéronefs et analogues qui sont connus dans la technique sous le nom de "vide-vite".

La technique antérieure a fait connaître différents dispositifs de cette nature pouvant être montés sur des réservoirs et, en particulier, le brevet français 76 13373 publié sous le No 2 350 250 a fait connaître un dispositif pour la vidange rapide de réservoirs, notamment de machines volantes, qui est caractérisé en ce que l'embouchure d'un trou de vidange du réservoir comporte une glace ou portée d'appui pour un clapet poussé élastiquement vers cette glace et disposé dans un obturateur en forme de couvercle qui est monté sur une tige guidée axialement et pouvant être déplacée entre deux positions dont l'une, qui correspond à la position d'ouverture, est définie par une première butée que comporte la tige et dont l'autre, qui correspond à la position de fermeture, est déterminée par une seconde butée de la tige et par des organes de verrouillage de cette seconde butée, un électro-aimant de commande coopérant avec les organes de verrouillage pour assurer leur déclenchement.

Les dispositif connus ci-dessus nécessitent la réalisation de pièces précises donc onéreuses pour rendre possibles des usages successifs et également des essais de vérification de bon fonctionnement.

L'invention vise à simplifier grandement les dispositifs existants en créant un nouveau dispositif de vidange qui peut être monté et démonté dans son ensemble de façon simple et qui ne comporte qu'un petit nombre de pièces pouvant être réalisées de façon bon marché car elles ne nécessitent, pour la plupart, qu'une précision relative.

En outre, selon l'invention, le dispositif peut ne pas être soumis à des essais fréquents car son fonctionnement dépend essentiellement d'organes de commande à durée de péremption longue et bien connue.

Par ailleurs, après avoir été utilisé, le dispositif de l'invention est en grande partie réutilisable en ne nécessitant que le changement de pièces simples et peu onéreuses.

Conformément à l'invention le dispositif de vidange pour réservoirs de carburant en particulier pour aéronefs et analogues, est caractérisé en ce qu'il comporte une embase fixée à la paroi du réservoir dans une ouverture de celui-ci, ladite embase supportant une collerette par des bras radiaux, ladite collerette étant reliée par un organe sécable à une porte (13) assurant la fermeture de l'embase et un ensemble pyrotechnique (16) étant prévu pour provoquer la rupture de l'organe sécable.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une coupe-élévation transversale schématique du dispositif de vidange, objet de l'invention, illustré en position fermée.

La fig. 2 est une coupe-élévation, analogue à la fig. 1, illustrant une modification.

La fig. 3 est une coupe-élévation transversale schématique analogue à la fig. 1 illustrant une modification.

La fig. 4 est une coupe-élévation illustrant une caractéristique supplémentaire.

Le dispositif illustré au dessin est destiné à être monté dans un réservoir 1 à la partie basse de celui-ci. De préférence, le réservoir 1 est muni d'un bourrelet 2 bordant une ouverture 3 dans laquelle est engagée une embase 4. L'embase 4 délimite, à sa périphérie, une couronne 5 comportant un organe d'étanchéité 6, par exemple un anneau torique coopérant avec le bourrelet 2.

La couronne 5 est, de préférence, munie d'une semelle 7 portant contre le dessous du bourrelet 2, semelle qui est traversée par des vis de fixation 8 ou autre organe analogue.

L'embase 4 présente, en son centre, une collerette 9 qui est reliée à la couronne 5 par des bras radiaux obliques 10.

La collerette 9 présente un taraudage central 11 dans lequel est vissé un manchon 12 faisant saillie d'une porte 13 assurant la fermeture de l'embase 4 contre laquelle ladite porte 13 prend appui.

Un organe d'étanchéité, constitué par au moins un joint 14, est prévu entre la porte 13 et l'embase, par exemple la semelle 7 de celle-ci.

Bien que cela ne soit pas représenté, l'étanchéité entre la porte 13 et l'embase pourrait être assurée avec la paroi interne de la couronne 5.

Le manchon 12 présente, dans sa paroi, au moins une encoche de rupture 15 de manière à constituer un organe sécable.

L'intérieur du manchon 12 contient une cartouche pyrotechnique 16 pouvant être actionnée par un percuteur 17 contenu dans un ensemble électromagnétique 18 ou analogue à raccordement étanche qui est fixé, par exemple vissé, dans le manchon 12.

Le manchon 12 est, par ailleurs, fermé, à sa partie basse, par un bouchon 19 relié avantageusement à la cartouche 16 par un ressort 20.

Outre ce qui précède, il est avantageux, comme l'illustre le dessin, de réaliser la collerette 9 de façon qu'elle présente des pattes radiales 9a correspondant à des pattes 21 d'une chemise 22 munie de pattes radiales rentrantes 23 qui sont fixées auxdites pattes 9a, par exemple par des vis 24.

La chemise 22 est munie, supplémentairement, à sa partie basse, de pattes 25 également radiales pour constituer des butées de retenue pour des saillies périphériques 26 d'un fût 27 formé ou rapporté sur la porte 13 autour du manchon 12.

Les écartements entre les pattes radiales 25, les saillies périphériques 26, de même qu'entre les pattes 9a et les pattes radiales rentrantes 23 sont prévus de manière à permettre l'emboîtement de la chemise 22 autour de la collerette 9 puis la mise en place des vis 24, de même que l'emboîtement de la chemise 22 autour du fut 27 avant la fixation de ladite chemise 22 par les vis 24.

Pour permettre un fonctionnement ne risquant pas d'être perturbé par des compressions parasites, il est avantageux que la porte 13 présente des lumières 28 entre le fût 27 et le manchon 12. Il est ainsi crée un circuit à évacuation des gaz produits lors du fonctionnement de la cartouche pyrotechnique 16.

Pour assurer la fermeture du dispositif de vidange, le manchon 12 est vissé dans la collerette 9 par exemple en agissant sur le bouchon 19 muni d'une découpe de vissage 29, par exemple un trait de scie.

Il est possible ainsi d'appliquer la porte 13 sous pression pour compenser les efforts qu'elle doit subir et qui peuvent atteindre une valeur comprise entre 5 et 10 bars dans certaines configurations de fonctionnement.

L'étanchéité entre l'intérieur du réservoir 1 et l'extérieur est assurée par des joints 30 interposés entre la collerette 9 et le fût 27.

S'il y a lieu de procéder à la vidange rapide du réservoir 1, l'ensemble électromagnétique 18 est alimenté de façon que le percuteur 17 amorce la cartouche pyrotechnique 16.

Comme l'illustre le dessin, l'ensemble électromagnétique 18 constitue un bouchon isolant la cartouche pyrotechnique 16 de l'intérieur du réservoir et il est avantageux, comme illustré, que des joints d'étanchéité 31 soient placés entre la collerette 9 et ledit ensemble électromagnétique 18.

Le déclenchement de la cartouche pyrotechnique 16 provoque la rupture du manchon 12 dont la partie séparée y compris le bouchon 19 est éjectée ainsi que la porte 13.

La porte 13 et son fût 27 sont déplacés et écartés de l'embase 4 en permettant au combustible de s'écouler à l'extérieur par les très larges ouvertures laissées libres par l'embase 4.

Les pattes 25 de la chemise 22 et 26 du fût 27 constituent des éléments de retenue lorsqu'elles sont amenées en contact pour empêcher que la porte 13 soit éjectée complètement.

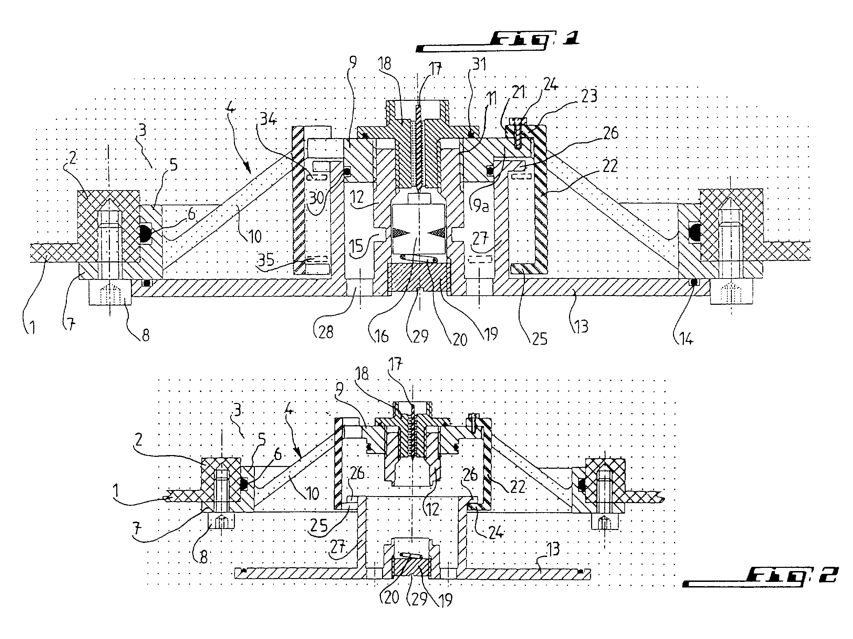

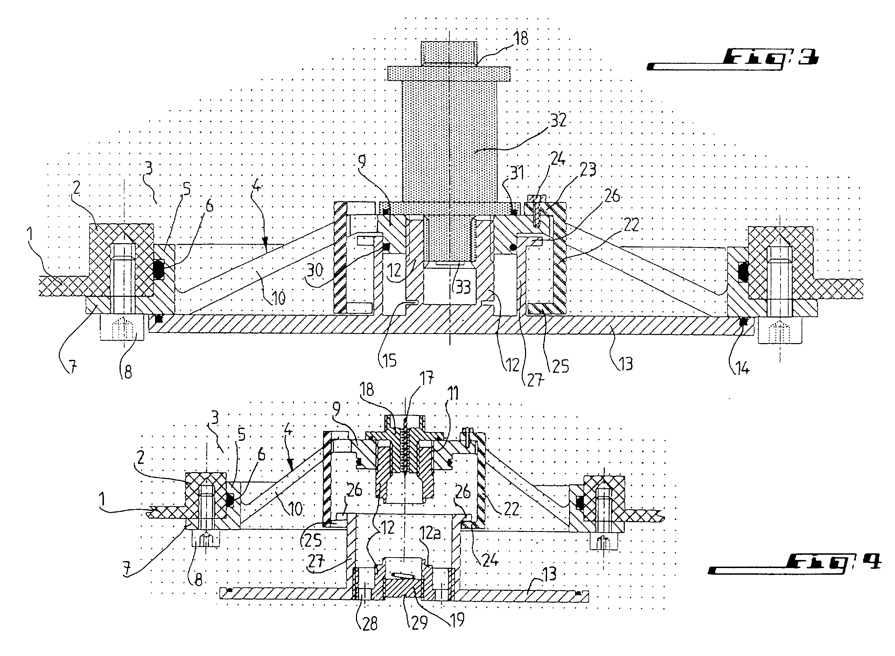

Dans la réalisation illustrée, la porte 13 doit de préférence être changée puisque le manchon 12 est rompu comme illustré par la fig. 2. Cela peut être réalisé facilement par exemple en faisant tourner la porte 13 pour que les saillies périphériques 26 soient amenées entre des pattes radiales 25. Ensuite, la partie rompue du manchon 12 peut être retirée en la dévissant et une nouvelle porte est alors mise en place.

Dans une variante illustrée à la fig. 4, le manchon 12 est rapporté de façon démontable sur la porte 13 par exemple en le vissant dans un fourreau 12a. Une telle disposition permet de ne remplacer que la manchon 12 et la cartouche pyrotechnique après usage.

Dans une autre variante, il est prévu des moyens d'amortissement entre la porte 13 et la chemise 22 pour éviter un choc en fin de course d'ouverture de la porte 13. Les moyens ci-dessus peuvent par exemple comprendre des anneaux 34 et 35, par exemple en matière souple, disposés en dessous des saillies 26 et au-dessus des pattes 25. Un faible espace est ménagé entre les anneaux et les parois du fût 27 d'une part et de la chemise 22 d'autre part. De la sorte on produit un effet d'amortissement lors de l'ouverture de la porte.

Pour mettre en place les anneaux 34 et 35, on prévoit de réaliser les pattes 25 de façon démontable et il en est de même des saillies 26. Il y a lieu également que la chemise 22 soit pleine sur la partie de sa hauteur qui se trouve en dessous des bras radiaux 10.

La fig. 3 illustre une légère variante suivant laquelle on met en place sur le manchon 12 un ensemble pyrotechnique 32 du type étanche, c'est-à-dire ne laissant pas échapper de gaz lors de son fonctionnement, cet ensemble pyrotechnique étant muni d'un piston 33 qui est déplacé lors de l'actionnement dudit ensemble pour percuter la zone sécable du manchon 12 en provoquant sa séparation et l'éjection de la porte 13 de la même manière que décrite précédemment.

L'invention n'est pas limitée aux exemples de réalisation, représentés et décrits en détail, car diverses modifications peuvent y être apportées sans sortir de son cadre.

## Revendications

1. Dispositif de vidange pour réservoirs de fluide en particulier de carburant en particulier pour aéronefs et analogues, caractérisé en ce qu'il comporte une embase (4) fixée à la paroi (1) du réservoir dans une ouverture de celui-ci, ladite embase supportant une collerette (9) par des bras radiaux (10), ladite collerette étant reliée par un organe sécable (15) à une porte (13) assurant la fermeture de l'embase (4) et un ensemble pyrotechnique (16) étant prévu pour provoquer la rupture de l'organe sécable.

2. Dispositif suivant la revendication 1, caractérisé en ce que l'organe sécable est constitué par un manchon (12) présentant une encoche de rupture (15), ledit manchon étant fixé à la collerette (9) et supportant l'ensemble pyrotechnique (16, 32) actionné par un ensemble électromagnétique (18) étanche isolant l'intérieur du manchon (12) de l'intérieur du réservoir (1).

3. Dispositif suivant l'une des revendications 1 et 2, caractérisé en ce que l'organe sécable constitué par le manchon (12) présentant l'encoche (15) est disposé à l'intérieur d'un fût (27) de la porte (13), fût mis en communication avec l'atmosphère par des lumières (28) pour constituer un circuit d'évacuation de gaz.

4. Dispositif suivant l'une des revendications 1 et 2, caractérisé en ce que l'ensemble pyrotechnique (32) est du type étanche à piston d'actionnement (33).

5. Dispositif suivant l'une des revendications 1 à 4, caractérisé en ce que l'ensemble pyrotechnique est constitué par une cartouche pyrotechnique (16) maintenue à l'intérieur du manchon (12) entre un bouchon de fermeture (19) dudit manchon et l'ensemble électromagnétique (18) relié à la collerette (9) de l'embase (4) par un joint (31).

6. Dispositif suivant l'une des revendications 1 à 5, caractérisé en ce que l'embase (4) est fixée au réservoir (1) par une semelle (7) et des vis de fixation (8).

7. Dispositif suivant la revendication 6, caractérisé en ce que la semelle (7) est formée à partir d'une couronne (5) reliée de façon étanche à un bourrelet (2) du réservoir (1).

8. Dispositif suivant l'une des revendications 1 à 7, caractérisé en ce que la porte (13) est reliée par un fût (27) à des pattes (26) venant en butée contre des pattes radiales (25) d'une chemise (22) lors de l'ouverture de ladite porte (13).

9. Dispositif suivant l'une des revendications 1 à 8, caractérisé en ce que la chemise (22) est fixée à la collerette (9) par des vis (24) vissées dans des pattes (9a) de ladite collerette (9).

10. Dispositif suivant l'une des revendications 1 à 9, caractérisé en ce que le manchon (12) est rapporté par une douille (12a) à la porte (13).

11. Dispositif suivant l'une des revendications 1 à 10 caractérisé par des moyens d'amortissement associés à la porte (13).
